# EUROPÄISCHE PATENTSCHRIFT

(11) **EP 1 180 254 B1**
(45) Veröffentlichungstag und Bekanntmachung des Hinweises auf die Patenterteilung: **30.07.2003**
(21) Anmeldenummer: 00927134.7
(22) Anmeldetag: 04.05.2000
(51) Int. Cl.: G06F 15/02

(54) **ELEKTRONISCHES RECHENGERÄT, INSBESONDERE ZUR DURCHFÜHRUNG VON CHEMISCHEN BERECHNUNGEN**
ELECTRONIC CALCULATING APPLIANCE, PARTICULARLY FOR CARRYING OUT CHEMICAL CALCULATIONS
APPAREIL DE CALCUL ELECTRONIQUE, S'UTILISANT NOTAMMENT POUR EFFECTUER DES CALCULS CHIMIQUES

(30) Priorität: 04.05.1999 DE 19920287
(43) Veröffentlichungstag der Anmeldung: 20.02.2002
(73) Patentinhaber: Ens, Florian, 87439 Kempten (DE)
(72) Erfinder: ENS, Florian, D-87439 Kempten (DE); BICHLER, Georg, D-87439 Kempten (DE)
(74) Vertreter: Vonnemann, G, Dr.
(86) Internationale Anmeldenummer: EP0003995
(87) Internationale Veröffentlichungsnummer: WO00067138

(56) Entgegenhaltungen:
- WO-A-91/03787
- WO-A-92/03775
- DE-A- 2 748 951

## Beschreibung

Die Erfindung betrifft ein elektronisches Rechengerät, insbesondere zur Durchführung von chemischen, biochemischen undloder molekularbiologischen Berechnungen, mit wenigstens einer Einstellvorrichtung, wobei wenigstens für die wichtigsten durchzuführenden Rechenoperationen Tasten bzw. Eingabeeinrichtungen vorgesehen sind.

Es ist eine Vielzahl verschiedenartigster elektronischer Rechengeräte bekannt, die jedoch alle den Nachteil aufweisen, dass zur Erlangung des gewünschten Ergebnisses meist mehrere einzelne Rechenoperationen hintereinander auf komplizierteste Weise ausgeführt werden müssen. Teilweise besteht nicht einmal eine Zwischenspeichermöglchkeit für Zwischenergebnisse, die zur Berechnung des Endergebnisses benötigt werden.

Ein elektronisches Rechengerät mit den Merkmalen des Oberbegriffs des Anspruchs 1 ist aus der WO 92 03775 A bekannt. Der Nachteil des bekannten Gerätes besteht jedoch darin, dass es nur in einem sehr eng begrenzten Gebiet der Chemie, nämlich der anorganischen Chemie Einsatz findet. Zwar ist ein theoretischer Einsatz im Bereich der Biologie und der Biochemie denkbar, jedoch wäre die Bedienung für diesen Fall so kompliziert, dass eine Verwendung in der Praxis ausscheidet.

Aus der WO 91/03787 zeigt ebenfalls ein elektronisches Rechengerät. Dieses Rechengerät dient zur Berechnung von Molekulargewichten, etc. und enthält Informationen über 105 Elemente, die über komplizierte Tastenkombinationen abgerufen werden können.

Die der Erfindung zugrunde liegende Aufgabe besteht darin ein elektronisches Rechengerät vorzuschlagen, welches auf einfache Weise die Berechnung von komplizierten, aber ständig benötigten Formeln in der Biochemie und in der Biologie ermöglicht.

Diese Aufgabe wird dadurch gelöst, dass die Tasten des Rechengerätes mit Informationen zu wenigstens den am häufigsten gebräuchlichen Aminosäuren und/oder Nukleotiden belegt sind. Gegenüber den aus dem Stand der Technik bekannten Rechnem wird zum erstenmal ein Rechengerät vorgeschlagen, das sich für den Einsatz in den neuen zukunftsweisenden Forschungsgebieten eignet. Im Berech der Lebensmittelchemie sowie in der Molekularbiologie etc. werden Erbgutträger analysiert, es werden Nukleotidstränge produziert, etc. Dies bedeutet, dass im Gegensatz zur klassischen Chemie der Informationsbedarf bezüglich Aminosäuren und Nukleotiden und das Arbeiten mit Informationen bzw. Daten von Aminosäuren und Nukleotiden an der Tagesordnung ist. Diesem Anspruch wird der klassische Chemierechner, der auch aus den Entgegenhaltungen bekannt ist, nicht gerecht. Der klassische Chemierechner weist lediglich Informationen zu einzelnen Elementen und in Ausnahmefällen zu einigen einfachen Verbindungen auf. Das Zusammenstellen von Aminosäuren und Nukleotiden aus den einzelnen Elementen ist sehr zeitaufwändig und vor allem birgt die Eingabetätigkeit eine große Fehlerquelle, da es häufig vorkommt, dass einzelne Elemente bei der langen Eingabe vergessen werden. Dagegen zeichnet sich die Erfindung dadurch aus, dass die benötigten Daten quasi auf Tastendruck vorhanden sind und verarbeitet werden können.

Äußerst vorteilhaft ist dabei auch, wenn die Tasten des Rechengerätes mit Informationen zu den 20 Aminosäuren und/oder 6 Nukleotiden belegt sind. Dadurch wird die Anwendbarkeit des Rechengerätes in der Biochemie und Molekularbiologie nochmals verbessert.

Sehr vorteilhaft ist es dabei auch, wenn diejenigen Tasten, die mit den am häufigsten gebräuchlichen chemischen Elemente belegt sind wenigstens ähnlich einem chemischen Periodensystem angeordnet sind.

Durch die Anordnung der Elementtasten wie in einem chemischen Periodensystem fällt einem Benutzer die Bedienung des Rechengerätes besonders leicht.

Als besonders vorteilhaft hat es sich erwiesen, wenn die Tasten mit Rechenoperationen und/oder Konstanten und/oder reinen Informationen belegt sind.

Hiermit ist gewährleistet, daß alle Informationen, die als Hilfsmittel bei chemischen Experimenten benötigt werden, stets zur Hand sind.

Gemäß einer weiteren Ausgestaltung der Erfindung ist es sehr vorteilhaft, wenn wenigstens ein Teil der Tasten als numerische Tasten ausgebildet ist

Sehr vorteilhaft ist es auch, wenn wenigstens ein Teil der Tasten mit alphabetischen Zeichen belegt ist.

Als äußerst vorteilhaft hat es sich auch erwiesen, wenn wenigstens ein Teil der Tasten als alphanumerische Tasten ausgebildet ist.

Durch eine derartige Ausgestaltung der Tasten ist die Eingabe von numerischen und/oder alphabetischen Zeichen sichergestellt.

Gemäß einer weiteren Ausgestaltung der Erfindung ist es besonders vorteilhaft, wenn die Tasten zusammen eine Belegung aufweisen, mit der ein einfaches Berechnen der Masse einer durch ihre Summenformel gekennzeichneten chemischen Verbindung ermöglicht wird.

Damit wird durch einfaches Eingeben der Summenformel die Masse der durch die Summenformel definierten Verbindung ausgegeben. Ein Einsetzen der Atommassen entfällt völlig. Durch Eingabe der Summenformel werden die gespeicherten Atommassen entsprechend der Summenformel aufaddiert.

Erfindungsgemäß ist es auch sehr vorteilhaft, wenn die Tastenbelegung derart ausgebildet ist, daß ein leichtes Umrechnen zwischen Stoffmenge und Masse einer Verbindung ermöglicht wird, insbesondere ist eine Stoffmenge durch einfaches Teilen ihrer Masse durch ihre über die entsprechende Summenformel eingegebene molare Masse ermittelbar.

Wenn ein Chemiker die Stoffmenge von beispielsweise 1 mol abwiegen soll, ist es ihm damit möglich, sofort die entsprechende Masse auszurechnen.

Es hat sich auch als vorteilhaft erwiesen, wenn die Tastenbelegung in einer Weise ausgebildet ist, welche die Berechnung von Volumina idealer und realer Gase ermöglicht.

Dadurch werden die doch recht aufwendigen Berechnung für den Anwender stark vereinfacht. Bei Eingabe von Volumina idealer und/oder realer Gase wird die Stoffmenge dieser Gase berechnet und angezeigt.

Gemäß einer weiteren Fortbildung der Erfindung hat es sich als sehr vorteilhaft erwiesen, wenn die Tastenbelegung in einer Weise ausgebildet ist, welche die Berechnung von Bindungsenthalpien ermöglicht

Sehr vorteilhaft ist es gemäß einer Weiterbildung der Erfindung auch, wenn die Tastenbelegung in einer Weise ausgebildet ist, welche die Berechnung von Dampfdrücken verschiedener Gemische ermöglicht.

Eine vorteilhafte Fortbildung der Erfindung liegt auch darin, daß die Tastenbelegung in einer Weise ausgebildet ist, welche den Abruf verschiedener Eigenschaften und Informationen der Elemente ermöglicht.

Ebenfalls äußerst vorteilhaft ist es, wenn die Tastenbelegung in einer Weise ausgebildet ist, welche den Abruf verschiedener Eigenschaften und Informationen wenigstens eines Teils der chemischen Verbindungen ermöglicht.

Hierdurch entfällt ein Umständliches Nachschlagen oft benötigter Informationen.

Als sehr vorteilhaft hat es sich auch erwiesen, wenn Speicher zur Zwischen-/Speicherung von Ergebnissen vorgesehen sind.

Die Bedienung des Rechengerätes wird durch die Möglichkeit Ergebnisse zu speichern, insbesondere bei längeren Rechnungen, bei denen Zwischenergebnisse gespeichert werden, entschieden vereinfacht. Zudem wird einem Benutzer in einem Labor damit erspart, zusätzlich noch Papier und Bleistift bei sich zu führen um abzuwiegende Gewichte zu notieren.

Auch ist es gemäß einer weiteren Ausgestaltung der Erfindung äußerst vorteilhaft, wenn wenigstens einzelne Tasten farbig ausgestaltet sind.

Dabei ist es vorteilhaft, wenn wenigstens einzelne Tastenblöcke farbig ausgestaltet sind.

Auch ist es dabei sehr vorteilhaft, wenn die farbige Ausgestaltung als farbige Beleuchtung ausgebildet ist.

Durch die farbige Ausgestaltung des Tastenfeldes wird die Bedienung des Rechengerätes nochmals vereinfacht. Eine beleuchtete Ausgestaltung der Tasten erleichtert insbesondere die Verwendung des Rechengerätes bei unzureichenden Beleuchtungsverhältnissen.

Es hat sich auch als äußerst vorteilhaft erwiesen, wenn das Rechengerät zusätzlich noch Tastenbelegungen und/oder Tasten und Funktionen aufweist, die den Einsatz als herkömmlichen Taschenrechner ermöglichen.

Hierdurch ist das Rechengerät multifunktionell ausgebildet, wodurch der Einsatz in vielen Fällen ermöglicht wird.

Sehr vorteilhaft ist es weiterhin, wenn das Rechengerät Tastenbelegungen und/oder Tasten und Funktionen aufweist, welche die Durchführung statistischer Berechnungen erlauben.

Damit ist es einem Benutzer zum Beispiel auf einfache Weise möglich den Mittelwert verschiedener Meßwerte, deren Standardabweichung und den gesamten Fehler des Mittelwertes und der Standardabweichung zu ermitteln

Gemäß einer weiteren Fortbildung der Erfindung ist es sehr vorteilhaft, wenn das Rechengerät wenigstens eine Schnittstelle zur Kommunikation mit externen Geräten aufweist.

Dadurch besteht die Möglichkeit Informationen im Rechengerät zu speichern bzw. Informationen vom Rechengerät an wenigstens ein anderes Gerät zu übertragen. Insbesondere besteht die Möglichkeit Berechnungen auf einem Drucker zu protokollieren.

Sehr vorteilhaft ist es auch, wenn das Rechengerät gegen Hitze, Feuchtigkeit und Lösungsmittel unempfindlich ausgebildet ist, wodurch es insbesondere Laboranforderungen gerecht wird.

Hierdurch ist sichergestellt, daß das Rechengerät im Laborbetrieb nicht durch die dort vorhandenen oftmals für elektronische Rechengeräte gefährlichen Umgebungsbedingungen beschädigt wird.

Gemäß einer weiteren Fortbildung der Erfindung ist es sehr vorteilhaft, wenn eine Uhr in das Rechengerät integriert ist.

Sehr vorteilhaft ist es auch, wenn eine Timerfunktion in das Rechengerät integriert ist.

Dadurch ist es einem Benutzer sehr leicht möglich verschiedenste zeitabhängige Labortätigkeiten zu kontrollieren.

Die Erfindung wird anhand eines Ausführungsbeispiels beschrieben.

Das Rechengerät ist in Bezug auf seinen mechanischen Aufbau und seine Abmessungen wenigstens annähernd einem herkömmlichen Taschenrechner nachempfunden. Auf der Oberseite des Rechengerätes ist eine Anzeige zur Ausgabe der Ergebnisse und ein Tastenfeld zur Eingabe der zugrundezulegenden Ausgangswerte und Auswahl verschiedener Rechenoperationen vorgesehen. Das Tastenfeld weist Tasten für alle Elemente des chemischen Periodensystems auf. Zusätzlich sind alle Ziffern von Null bis Neun, die Grundrechenarten und weitere Rechenarten wie Wurzel und Potenz, sowie Funktionstasten zur Einstellung verschiedener Betriebsmodi des Rechengerätes durch jeweils eigene Tasten repräsentiert.

Eine der beiden Hauptfunktionen des Rechengerätes ist die Berechnung der molaren Masse bzw. der Molekülmasse einer chemischen Verbindung wie zum Beispiel Glukose (C₆H₁₂O₆). Zuerst ist die Taste C zu betätigen, woraufhin die molare Masse von Kohlenstoff in der Anzeige dargestellt wird. Sodann ist die Anzahl der Kohlenstoffatome im Molekül anzugeben. Es ist die Zahl "6" einzutippen. Bei Betätigen der Taste H für Wasserstoff wird die molare Masse von Kohlenstoff mit deren Wichtung ("6") multipliziert und das Zwischenergebnis automatisch zwischengespeichert. Die molare Masse des Wasserstoffs wird in der Anzeige dargestellt. Es ist nun wiederum die Anzahl der Atome des jeweiligen Elements pro Molekül einzutippen. Für Wasserstoff ist dies nun "12". Als nächstes wird die Taste "O" betätigt, woraufhin die molare Masse des Sauerstoffs in der Anzeige dargestellt wird. Die einzutippende Wichtung für Sauerstoff ist "6". Nach betätigen der Taste "=" wird die letzte Multiplikation, molare Masse des Sauerstoffs mit dessen Wichtung, ausgeführt und mit den beiden Zwischenergebnissen addiert. Es erscheint nun in der Anzeige die molare Masse von Glukose, nämlich "160" in der gebräuchlichen Einheit g/mol.

Zahlenmäßig unterscheidet sich von diesem Ergebnis die Molekülmasse nicht. Die Einheit beträgt jedoch 1u = 1.266 * 10²⁴g. Es bleibt somit dem Benutzer überlassen, im dargestellten Ergebnis entweder die molare Masse oder die Molekülmasse zu sehen.

Die andere Hauptfunktion betrifft die Umrechnung von Stoffmengen in Massen. Es wird das Ergebnis der ersten Hauptfunktion des Rechengerätes "160" mit der gewünschten Stoffmenge "0.15" multipliziert. Der Benutzer kann dann in der Anzeige die Masse des abzuwiegenden Stoffes in Gramm ("27") erkennen. Die zweite Hauptfunktion ist natürlich auch ohne die erste Hauptfunktion nutzbar.

Ein Anwendungsbeispiel ist hier die Berechnung der an einer chemischen Reaktion beteiligten Massen, die für eine vollständige Umsetzung der Stoffe nötig sind. Durch die Integration von Speichern in das Rechengerät erhält der Benutzer die Möglichkeit, öfters abzuwiegende Massen im Gerät zu hinterlegen und bei Bedarf abzurufen.

Weitere Funktionen des Rechengerätes sind denkbar. Hierzu gehört die Berechnung der Volumina idealer Gase, die Berechnung der Volumina diverser realer Gase, die Berechnung von Bindungsenthalpien und die Berechnung von Dampfdrücken verschiedener Gemische. Eine weitere denkbare Funktion des Rechengerätes ist die Darstellung reiner Informationen, wie geschichtliche Daten der Elemente, chemische Eigenschaften, physikalische Eigenschaften, Kemeigenschaften, Eigenschaften der Elektronenhülle und umweltbezogene und biologische Daten. Der Zugriff auf derartige Informationen kann durch Kombination mehrerer Tasten erfolgen, wobei diese Tastenkombinationen auf der Rückseite des Rechengerätes oder auf einer ausklappbaren Tafel vermerkt sein können.

Zusätzlich ist am Rechengerät eine Schnittstelle angeordnet, welche die Kommunikation des Rechengerätes mit einem Personal Computer, einem Drucker od. dgl. ermöglicht. Dadurch ist es möglich einerseits die im Rechengerät gespeicherten Informationen auf einen aktuellen Stand zu bringen oder andererseits die im Rechengerät gespeicherten Informationen an verschiedene Anwendungsgebiete anzupassen. Die Schnittstelle kann als Kabelverbindung oder Infrarot-Schnittstelle realisiert sein. Auch andere Ausgestaltungen der Schnittstelle sind denkbar.

Durch eine eventuell in das Rechengerät integrierte Uhren- und/oder Timerfunktion können verschiedenste Labortätigkeiten gesteuert werden. Es ist einem Benutzer möglich, den Timer des Rechengerätes zum Beispiel auf eine Zeit von 3 Stunden zu stellen, wodurch das Rechengerät nach Ablauf dieser 3 Stunden den Benutzer auf den Zeitablauf optisch und/oder akustisch hinweist. Er kann dann die geplante Tätigkeit ausführen.

## Patentansprüche

1. Elektronisches Rechengerät, insbesondere zur Durchführung von chemischen, biochemischen und/oder molekularbiologischen Berechnungen, mit wenigstens einer Einstellvorrichtung, wobei wenigstens für die wichtigsten durchzuführenden Rechenoperationen Tasten bzw. Eingabeeinrichtungen vorgesehen sind, **dadurch gekennzeichnet, dass** die Tasten des Rechengerätes mit Informationen zu wenigstens den am häufigsten gebräuchlichen Aminosäuren und/oder Nukleotiden belegt sind.

2. Elektronisches Rechengerät nach Anspruch 1, **dadurch gekennzeichnet, dass** die Tasten des Rechengeräts mit Informationen zu wenigstens den am häufigsten gebräuchlichen Elementen des chemischen Periodensystems und/oder Informationen zu wenigstens den am häufigsten gebräuchlichen chemischen Verbindungen belegt sind.

3. Rechengerät nach Anspruch 1, **dadurch gekennzeichnet, daß** die Tasten des Rechengerätes mit Informationen zu den 20 Aminosäuren und/oder 6 Nukleotiden belegt sind.

4. Rechengerät nach einem der vorangehenden Ansprüchen, **dadurch gekennzeichnet, daß** diejenigen Tasten, die mit den am häufigsten gebräuchlichen chemischen Elemente belegt sind wenigstens ähnlich einem chemischen Periodensystem angeordnet sind.

5. Rechengerät nach einem der vorangehenden Ansprüche, **dadurch gekennzeichnet, daß** die Tasten mit Rechenoperationen und/oder Konstanten und/oder reinen Informationen belegt sind.

6. Rechengerät nach einem der vorangehenden Ansprüche, **dadurch gekennzeichnet, daß** wenigstens ein Teil der Tasten als numerische Tasten ausgebildet ist.

7. Rechengerät nach einem der vorangehenden Ansprüche, **dadurch gekennzeichnet, daß** wenigstens ein Teil der Tasten mit alphabetischen Zeichen belegt ist.

8. Rechengerät nach einem der vorangehenden Ansprüche, **dadurch gekennzeichnet, daß** wenigstens ein Teil der Tasten als alphanumerische Tasten ausgebildet ist.

9. Rechengerät nach einem der vorangehenden Ansprüche, **dadurch gekennzeichnet, daß** die Tasten zusammen eine Belegung aufweisen, mit der ein einfaches Berechnen der Masse einer durch ihre Summenformel gekennzeichnete chemische Verbindung ermöglicht wird.

10. Rechengerät nach einem der vorangehenden Ansprüche, **dadurch gekennzeichnet, daß** die Tastenbelegung derart ausgebildet ist, daß ein leichtes Umrechnen zwischen Stoffinenge und Masse einer Verbindung ermöglicht wird, insbesondere ist eine Stoffmenge durch einfaches Teilen ihrer Masse durch ihre über die entsprechende Summenformel eingegebene molare Masse ermittelbar.

11. Rechengerät nach einem der vorangehenden Ansprüche, **dadurch gekennzeichnet, daß** die Tastenbelegung in einer Weise ausgebildet ist, welche die Berechnung von Volumina idealer und realer Gase ermöglicht.

12. Rechengerät nach einem der vorangehenden Ansprüche, **dadurch gekennzeichnet, daß** die Tastenbelegung in einer Weise ausgebildet ist, welche die Berechnung von Bindungsenthalpien ermöglicht.

13. Rechengerät nach einem der vorangehenden Ansprüche, **dadurch gekennzeichnet, daß** die Tastenbelegung in einer Weise ausgebildet ist, welche die Berechnung von Dampfdrücken verschiedener Gemische ermöglicht.

14. Rechengerät nach einem der Ansprüche 2 bis 14, **dadurch gekennzeichnet, daß** die Tastenbelegung in einer Weise ausgebildet ist, welche den Abruf verschiedener Eigenschaften und Informationen der Elemente ermöglicht

15. Rechengerät nach einem der Ansprüche 2 bis 15, **dadurch gekennzeichnet, daß** die Tastenbelegung in einer Weise ausgebildet ist, welche den Abruf verschiedener Eigenschaften und Informationen wenigstens eines Teils der chemischen Verbindungen ermöglicht.

16. Rechengerät nach einem der vorangehenden Ansprüche, **dadurch gekennzeichnet, daß** Speicher zur Zwischen-/Speicherung von Ergebnissen vorgesehen sind.

17. Rechengerät nach einem der Ansprüche 2 bis 17, **dadurch gekennzeichnet, daß** wenigstens einzelne Tasten farbig ausgestaltet sind.

18. Rechengerät nach Anspruch 18, **dadurch gekennzeichnet, daß** wenigstens einzelne Tastenblöcke farbig ausgestaltet sind.

19. Rechengerät nach Anspruch 18 oder 19, **dadurch gekennzeichnet, daß** die farbige Ausgestaltung als farbige Beleuchtung ausgebildet ist.

20. Rechengerät nach einem der vorangehenden Ansprüche, **dadurch gekennzeichnet, daß** das Rechengerät zusätzlich noch Tastenbelegungen und/oder Tasten und Funktionen aufweist, die den Einsatz als herkömmlichen Taschenrechner ermöglichen.

21. Rechengerät nach einem der vorangehenden Ansprüche, **dadurch gekennzeichnet, daß** das Rechengerät Tastenbelegungen und/oder Tasten und Funktionen ausweist, welche die Durchführung statistischer Berechnungen erlauben.

22. Rechengerät nach einem der vorangehenden Ansprüche, **dadurch gekennzeichnet, daß** das Rechengerät wenigstens eine Schnittstelle zur Kommunikation mit externen Geräten aufweist.

23. Rechengerät nach einem der vorangehenden Ansprüche, **dadurch gekennzeichnet, daß** das Rechengerät gegen Hitze, Feuchtigkeit und Lösungsmittel unempfindlich ausgebildet ist, wodurch es insbesondere Laboranforderungen gerecht wird.

24. Rechengerät nach einem der vorangehenden Ansprüche, **dadurch gekennzeichnet, daß** eine Uhr in das Rechengerät integriert ist.

25. Rechengerät nach einem der vorangehenden Ansprüche, **dadurch gekennzeichnet, daß** eine Timerfunktion in das Rechengerät integriert ist.

## Claims

1. Electronic calculator, especially for making chemical, biochemical and/or molecular biological calculations, with at least one setting device, wherein keys or input devices are provided at least for the most important calculation operations to be carried out, **characterised in that** the keys of the calculator are allocated information on at least the most common amino acids and/or nucleotides.

2. Electronic calculator according to claim 1, **characterised in that** the keys of the calculator are allocated information on at least the most common elements of the chemical periodic table and/or information on at least the most common chemical compounds.

3. Calculator according to claim 1, **characterised in that** the keys 1 of the calculator are allocated information on the 20 amino acids and/or six nucleotides.

4. Calculator according to one of the preceding claims, **characterised in that** those keys allocated the most common chemical elements are arranged at least similar to a chemical periodic table.

5. Calculator according to one of the preceding claims, **characterised in that** the keys are allocated calculation operations and/or constants and/or pure information.

6. Calculator according to one of the preceding claims, **characterised in that** at least some of the keys are constructed as numeric keys.

7. Calculator according to one of the preceding claims, **characterised in that** at least some of the keys are allocated alphabetic symbols.

8. Calculator according to one of the preceding claims, **characterised in that** at least some of the keys are constructed as alphanumeric keys.

9. Calculator according to one of the preceding claims, **characterised in that** the keys together have an allocation which makes possible a simple calculation of the mass of a chemical compound **characterised by** its summation formula.

10. Calculator according to one of the preceding claims, **characterised in that** the key allocation is constructed such that it is easy to convert between quantity of substance and mass of a compound, especially a quantity of a substance can be determined by simply dividing its mass by its molar mass entered via the corresponding summation formula.

11. Calculator according to one of the preceding claims, **characterised in that** the key allocation is constructed in such a fashion that it is possible to calculate volumes of ideal and real gases.

12. Calculator according to one of the preceding claims, **characterised, in that** the key allocation is constructed in such a fashion that it is possible to calculate binding enthalpies.

13. Calculator according to one of the preceding claims, **characterised in that** the key allocation is constructed in such a fashion that it is possible to calculate vapour pressures of various mixtures.

14. Calculator according to one of claims 2 to 14, **characterised in that** the key allocation is constructed in such a fashion that it is possible to retrieve various properties and information on the elements.

15. Calculator according to one of claims 2 to 15, **characterised in that** the key allocation is constructed in such a fashion that it is possible to retrieve various properties and information at least on some of the chemical compounds.

16. Calculator according to one of the preceding claims, **characterised in that** memories are provided for intermediate storage/storage of results.

17. Calculator according to one of claims 2 to 17, **characterised in that** at least individual keys are configured as coloured.

18. Calculator according to claim 18, **characterised in that** at least individual blocks of keys are configured as coloured.

19. Calculator according to claim 18 or 19, **characterised in that** the coloured configuration is constructed as coloured illumination.

20. Calculator according to one of the preceding claims, **characterised in that** the calculator additionally has key allocations and/or keys and functions which enable it to be used as a conventional pocket calculator.

21. Calculator according to one of the preceding claims, **characterised in that** the calculator has key allocations and/or keys and functions which allow statistical calculations to be carried out.

22. Calculator according to one of the preceding claims, **characterised in that** the calculator at least has an interface for communication with external equipment.

23. Calculator according to one of the preceding claims, **characterised in that** the calculator is constructed to be non-sensitive to heat, moisture and solvents whereby it especially meets laboratory requirements.

24. Calculator according to one of the preceding claims, **characterised in that** a clock is built into the calculator.

25. Calculator according to one of the preceding claims, **characterised in that** a time function is built into the calculator.

## Revendications

1. Appareil de calcul électronique, notamment pour la réalisation de calculs chimiques, bio-chimiques et/ou macrobiologiques, avec au moins un dispositif de réglage, des touches ou dispositifs d'entrée étant prévus pour au moins réaliser les opérations de calcul les plus importantes, **caractérisé en ce que** les touches de l'appareil de calcul sont programmées avec des informations concernant au moins les acides aminés et/ou nucléotides les plus courants.

2. Appareil de calcul électronique selon la revendication 1, **caractérisé en ce que** les touches de l'appareil de calcul sont programmées avec des informations concernant au moins les éléments les plus courants de la table périodique chimique et/ou d'informations concernant au moins les composés chimiques les plus courants.

3. Appareil de calcul selon la revendication 1, **caractérisé en ce que** les touches de l'appareil de calcul sont programmées avec des informations concernant les 20 acides aminés et/ou six nucléotides.

4. Appareil de calcul selon une des revendications précédentes, **caractérisé en ce que** les touches programmées avec les éléments chimiques utilisés le plus souvent sont disposées au moins de façon similaire à la table périodique chimique.

5. Appareil de calcul selon une des revendications précédentes, **caractérisé en ce que** les touches sont programmées avec des opérations de calcul et/ou constantes et/ou informations pures.

6. Appareil de calcul selon une des revendications précédentes, **caractérisé en ce qu'**au moins une partie des touches est réalisée sous forme de touches numériques.

7. Appareil de calcul selon une des revendications précédentes, **caractérisé en ce qu'**au moins une partie des touches est programmée avec des caractères alphabétiques.

8. Appareil de calcul selon une des revendications précédentes, **caractérisé en ce qu'**au moins une partie des touches est réalisée sous forme de touches alphanumériques.

9. Appareil de calcul selon une des revendications précédentes, **caractérisé en ce que** l'ensemble des touches présente une programmation permettant de calculer de façon simple la masse d'un composé chimique **caractérisé par** sa formule élémentaire.

10. Appareil de calcul selon une des revendications précédentes, **caractérisé en ce que** la programmation des touches est réalisée de manière à permettre une conversion facile entre quantité de matière et masse d'un composé, la quantité de matière étant notamment déterminable en divisant sa masse par la masse molaire entrée par la formule élémentaire correspondante.

11. Appareil de calcul selon une des revendications précédentes, **caractérisé en ce que** la programmation des touches est réalisée de manière à permettre le calcul de volumes de gaz parfaits ou réels.

12. Appareil de calcul selon une des revendications précédentes, **caractérisé en ce que** la programmation des touches est réalisée de manière à permettre le calcul d'enthalpies de liaison.

13. Appareil de calcul selon une des revendications précédentes, **caractérisé en ce que** la programmation des touches est réalisée de manière à permettre le calcul des pressions de gaz de différents mélanges.

14. Appareil de calcul selon une des revendications 2 à 14, **caractérisé en ce que** la programmation des touches est réalisée de manière permettant l'interrogation de différentes propriétés et informations des éléments.

15. Appareil de calcul selon une des revendications 2 à 15 **caractérisé en ce que** la programmation des touches est réalisée de manière à permettre l'interrogation de différentes propriétés et informations d'au moins une partie des composés chimiques.

16. Appareil de calcul selon une des revendications précédentes, **caractérisé en ce que** des mémoires sont prévues pour la sauvegarde intermédiaire/sauvegarde de résultats.

17. Appareil de calcul selon une des revendications 2 à 17, **caractérisé en ce qu'**au moins certaines touches sont réalisées en couleur.

18. Appareil de calcul selon la revendication 18, **caractérisé en ce qu'**au moins certains blocs de touches sont réalisés en couleur.

19. Appareil de calcul selon une des revendications 18 ou 19, **caractérisé en ce que** la réalisation en couleur est effectuée sous forme d'éclairage de couleur.

20. Appareil de calcul selon une des revendications précédentes, **caractérisé en ce que** l'appareil de calcul présente en supplément des programmations de touches et/ou touches et fonctions permettant l'utilisation comme calculatrice de poche classique.

21. Appareil de calcul selon une des revendications précédentes, **caractérisé en ce que** l'appareil de calcul présente des programmations de touches et/ou touches et fonctions permettant la réalisation de calculs statistiques.

22. Appareil de calcul selon une des revendications précédentes, **caractérisé en ce que** l'appareil de calcul présente au moins une interface pour la communication avec des appareils externes.

23. Appareil de calcul selon une des revendications précédentes, **caractérisé en ce que** l'appareil de calcul est réalisé pour être insensible à la chaleur, l'humidité et aux solvants le rendant particulièrement approprié pour les exigences en laboratoire.

24. Appareil de calcul selon une des revendications précédentes, **caractérisé en ce qu'**une montre est intégrée dans l'appareil de calcul.

25. Appareil de calcul selon une des revendications précédentes, **caractérisé en ce qu'**une fonction de minutage est intégrée dans l'appareil de calcul.
